# EUROPÄISCHE PATENTANMELDUNG

(11) **EP 1 867 749 A1**
(43) Veröffentlichungstag der Anmeldung: **19.12.2007**
(21) Anmeldenummer: 06012071.4
(22) Anmeldetag: 12.06.2006
(51) Int. Cl.: C23C 4/12, F01D 5/00

(54) **Verfahren zum Aufbringen von Material auf ein Bauteil**

(71) Anmelder: SIEMENS AKTIENGESELLSCHAFT, 80333 München (DE)
(72) Erfinder: Bergander, Katharina, 13503 Berlin (DE); Bolz, Andrea, 13591 Berlin (DE)

(57) **Zusammenfassung**

Die vorliegende Erfindung betrifft ein Verfahren zum Aufbringen von Material auf ein Bauteil (1), das ein Substrat (4) aus einem ersten Material umfasst. Auf dem Substrat (4) wird ein Geflecht (13) angeordnet, das ein zweites Material umfasst. Das Substrat (4) und das darauf angeordnete Geflecht (13) werden mittels eines Spritzverfahrens mit einem Beschichtungsmaterial (16) beschichtet, das ein drittes Material umfasst. Das erste, zweite und dritte Material sind artgleiche Materialien.

## Beschreibung

Die vorliegende Erfindung betrifft ein Verfahren zum Aufbringen von Material auf ein Bauteil. Auf das Bauteil wird ein Geflecht angeordnet, ggf. fixiert und anschließend ein Beschichtungsmaterial aufgebracht.

Bauteile, wie beispielsweise Bauteile einer Gasturbine, können im Betrieb Bedingungen ausgesetzt sein, die zu Verschleiß der Bauteiloberfläche durch Korrosion und/oder Oxidation, Risse, Abplatzung, etc. führen können. Dabei entstehen Vertiefungen in den Oberflächen der Bauteile, die beim Wiederaufarbeiten der Bauteile aufgefüllt werden müssen. Oft werden diese Vertiefungen mit einem Lot aufgefüllt, wobei das Lot jedoch geringere mechanische Kennwerte aufweist als das Grundmaterial des Bauteils.

Ein verbessertes Lot, in dem Kurzfasern Verwendung finden, ist aus der US 5,666,643 bekannt. Die verwendeten Kurzfasern erzeugen jedoch nicht den gewünschten Anstieg in der mechanischen Festigkeit. Die mechanischen Eigenschaften sind durch das Lot limitiert.

Weiterhin können die durch die Betriebsbeanspruchung verringerten Wandstärken bzw. gebildeten Vertiefungen an Gasturbinenbauteilen durch thermisches Spritzen von artgleichen Werkstoffen (zum Beispiel Vakuumplasmaspritzen oder Hochgeschwindigkeitsflammspritzen) in der Kontur wieder hergestellt werden. Wegen des quasi superplastischen (Kriech- ) Verhaltens dieser Schichten unter Betriebsbeanspruchung tragen die Schichten nicht zur Festigkeit des Bauteils bei.

Auftragsschweißen ist in mechanisch höher beanspruchten Bereichen einer Gasturbine nicht einsetzbar, weil die Bildung von Heißrissen an bspw. Nickelbasiswerkstoffen bis jetzt noch nicht vermeidbar ist.

Gegenüber diesem Stand der Technik ist es eine Aufgabe der vorliegenden Erfindung, ein Verfahren zum Aufbringen von Material auf ein Bauteil, insbesondere ein Bauteil einer Gasturbine, bereitzustellen, durch das die Festigkeit im rekonstruierten Bereich verbessert wird.

Diese Aufgabe wird durch ein Verfahren gemäß Anspruch 1 gelöst.

Bei dem erfindungsgemäßen Verfahren zum Aufbringen von Material auf ein Bauteil, das ein Substrat aus einem ersten Material umfasst, wird auf dem Substrat ein Geflecht angeordnet. Das Geflecht umfasst ein zweites Material. Das Substrat und das darauf angeordnete Geflecht werden mittels eines Spritzverfahrens mit einem Beschichtungsmaterial beschichtet. Das Beschichtungsmaterial umfasst ein drittes Material. Das erste, zweite und dritte Material sind artgleiche Materialien, wobei der Begriff "artgleiche Materialien" identische und/oder ähnliche Materialien einschließen soll. Artgleiche Materialien sind insbesondere Materialien, die gleiche oder ähnliche Eigenschaften wie Härte, Zugfestigkeit und Bruchdehnung aufweisen.

Das artgleiche Geflecht, das auf dem Substrat angeordnet wird, unterstützt die Festigkeit im rekontourierten Bereich. Damit ist nicht nur die äußere Kontour wiederherstellbar, sondern wird zusätzlich der tragende Querschnitt vergrößert. Durch Beschichten des Substrats mit dem darauf angeordneten Geflecht mit einem Beschichtungsmaterial wird die Haftung des Geflechts an dem Substrat verbessert. Das Geflecht kann beispielsweise eine Fasermatte oder ein Netz aus Fasern sein.

In einer vorteilhaften Weiterbildung des erfindungsgemäßen Verfahrens umfasst das Spritzverfahren ein thermisches Spritzverfahren. Das thermische Spritzverfahren kann insbesondere als Flammspritzverfahren, etwa als Hochgeschwindigkeitsflammspritzverfahren oder Plasmaspritzverfahren ausgestattet sein. Beim thermischen Spritzen wird das Beschichtungsmaterial, das insbesondere in Pulverform vorliegt, mittels einer Gasflamme oder eines Lichtbogens erhitzt und mit hoher Geschwindigkeit auf das Substrat und das darauf angeordnete Geflecht gespritzt. Beim Flammspritzen wird mit einer Flamme aus Brenngas-Sauerstoffgemisch gearbeitet, die das verwendete Beschichtungsmaterial mitreißt und erhitzt. Durch die Flamme kann das Beschichtungsmaterial teilweise verändert werden (durch Oxidation, Reduktion und dergleichen). Beim Plasmaspritzen wird das Pulver in ein heißes, durch den Lichtbogen ionisiertes Gas eingebracht, welches das Pulver mit sich reißt. Statt thermischer Spritzverfahren können grundsätzlich auch Kaltgasspritzverfahren zum Einsatz kommen.

In einer Weiterbildung des erfindungsgemäßen Verfahrens wird nach der Beschichtung des Substrats und des Geflechts mit dem Beschichtungsmaterial eine Wärmebehandlung durchgeführt. Durch die Wärmebehandlung erfolgt eine feste Anbindung der ersten, zweiten und dritten Materialien auf Grund von Diffusion. Vorteilhaft umfasst die Wärmebehandlung ein Lösungsglühen.

In einer vorteilhaften Ausführungsform des erfindungsgemäßen Verfahrens wird das Geflecht in einer Vertiefung des Substrats angeordnet und besonders vorteilhaft an dem Substrat fixiert, bevor die Beschichtung erfolgt.

Das erfindungsgemäße Verfahren kann besonders vorteilhaft für die Reparatur von Turbinenbauteilen zur Anwendung kommen. Insbesondere wird das erfindungsgemäße Verfahren vorteilhaft zur Reparatur einer Turbinenschaufel oder eines Ringsegmentes einer Gasturbine eingesetzt.

Das erfindungsgemäße Verfahren findet insbesondere bei einem Bauteil Anwendung, bei dem das erst Material eine Basislegierung auf Fe-, Co- oder Ni-Basis umfasst.

In den abhängigen Ansprüchen sind weitere vorteilhafte Maßnahmen aufgelistet, die in vorteilhafter Art und Weise beliebig miteinander verknüpft werden können.

Weitere Merkmale, Eigenschaften und Vorteile des erfindungsgemäßen Verfahrens ergeben sich aus der nachfolgenden Beschreibung von Ausführungsbeispielen unter Bezugnahme auf die beiliegenden Figuren.

Es zeigen:
Figuren 1-4, wie mit einem erfindungsgemäßen Verfahren eine Vertiefung eines Bauteils aufgefüllt wird,
Figur 5 beispielhaft eine Gasturbine in einem Längsteilschnitt,
Figur 6 die perspektivische Ansicht einer Laufschaufel oder einer Leitschaufel einer Strömungsmaschine und
Figur 7 eine Brennkammer einer Gasturbine.

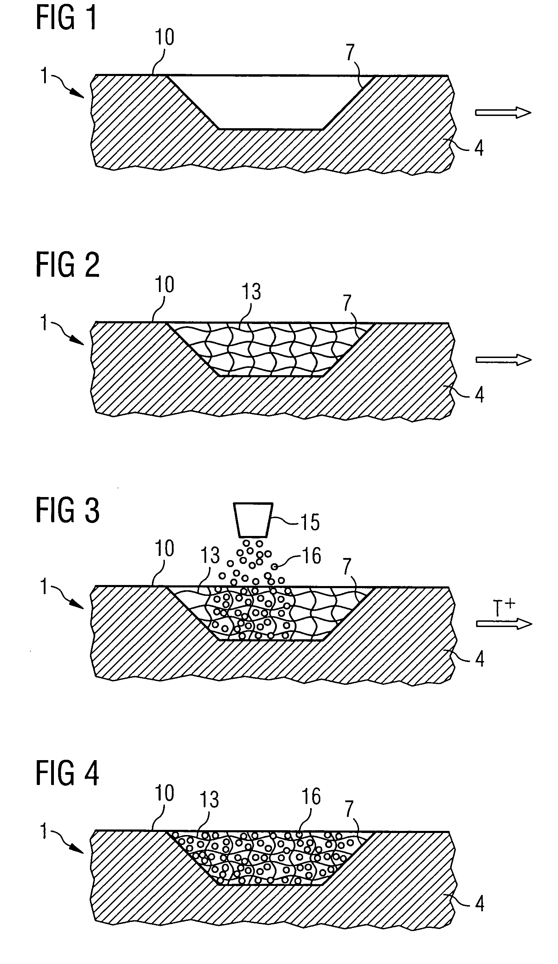

Figur 1 zeigt ein Bauteil 1, das ein Substrat 4 umfasst. Das Substrat 4 weist eine Vertiefung 7 und eine Oberfläche 10 auf.

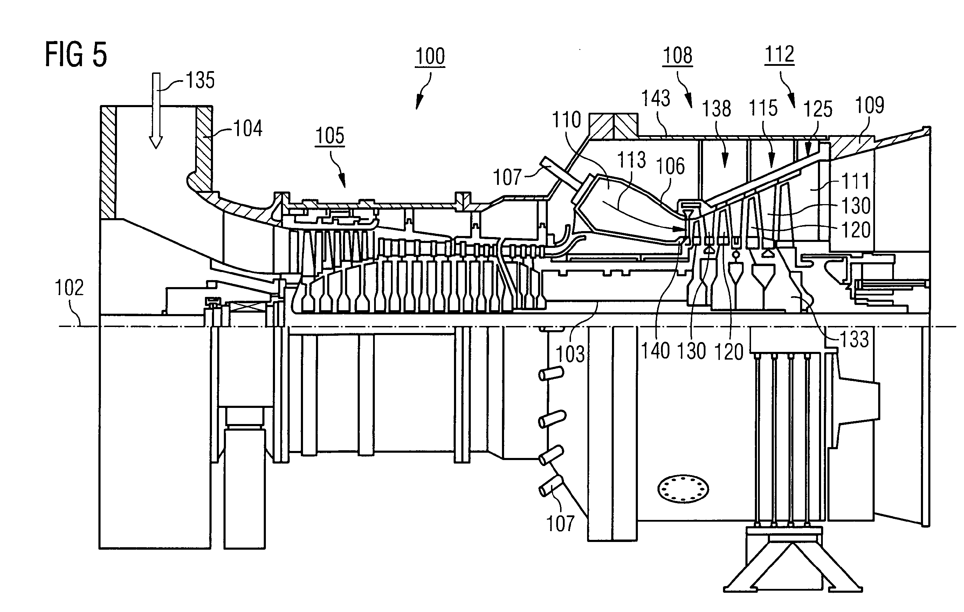

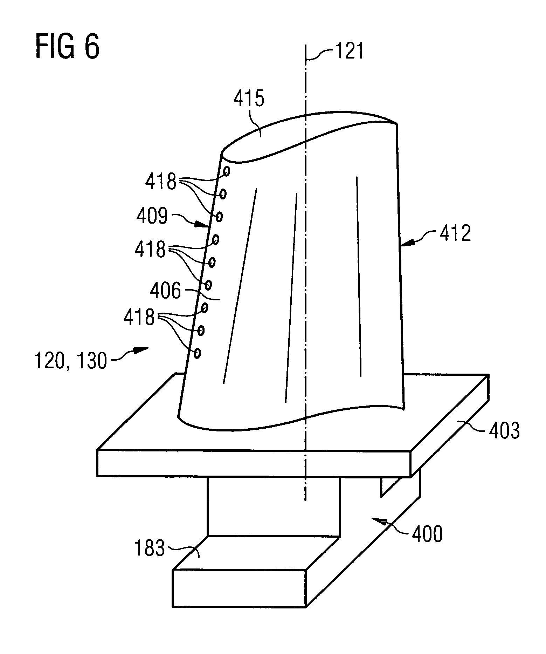

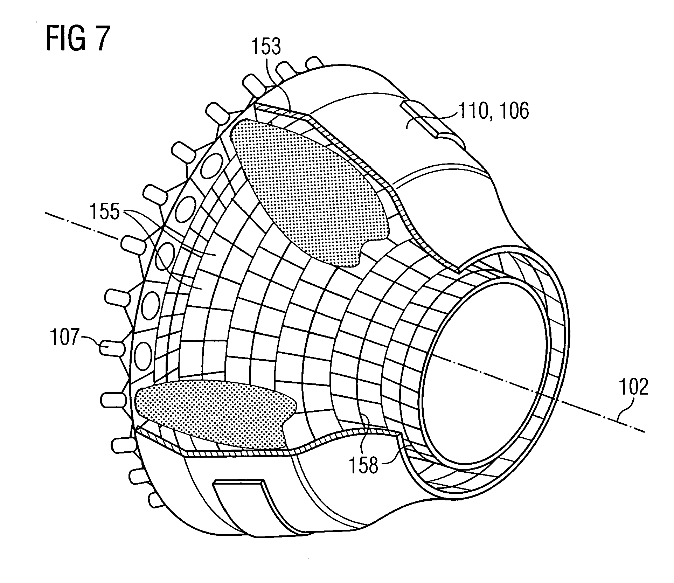

Das Bauteil 1 kann ein Bauteil einer Turbine, insbesondere einer Dampf- oder Gasturbine 100 (Figur 5) sein. Dies sind dann beispielsweise Turbinenschaufeln 120, 130 (Figur 6), Hitzeschildelemente 155 (Figur 7) oder sonstige Gehäuseteile 138 (Figur 5), die beispielsweise aus Nickel-, Kobaltund/oder eisenbasierten Superlegierungen bestehen.

Insbesondere beim Wiederaufarbeiten von gebrauchten Bauteilen 1 (Refurbishment), aber auch bei der Neuherstellung müssen Vertiefungen 7, die beispielsweise im Bereich eines Risses, einer korrodierte Stelle oder einer oxidierte Stelle entstanden sein können, aufgefüllt werden.

Ebenso kann großflächig eine Beschichtung oder Verdickung aufgebracht werden, da das Bauteil 1 beispielsweise in einem bestimmten Bereich nicht oder nicht mehr die erforderliche Dicke oder Wanddicke (bei einem hohlen Bauteil 1) aufweist.

Figur 2 zeigt das Bauteil 1 mit der Vertiefung 7, in die eine schematisch gezeigte Fasermatte 13 als Geflecht eingebracht ist. Die Vertiefung 7 wird mit der Fasermatte 13 ausgefüllt. Die Fasermatte 13 ist an die Form der Vertiefung 7 angepasst.

Figur 3 zeigt das Bauteil 1 mit der Vertiefung 7 und der Fasermatte 13, auf die ein Pulver 16 als Beschichtungsmaterial aufgebracht wird. Mittels einer Flammspritzvorrichtung 15 oder einer anderen geeigneten Spritzvorrichtung wird ein Pulver 16 als Beschichtungsmaterial auf die Fasermatte 13 und in die Vertiefung 7 gespritzt. Die Vorrichtung 15 ist insbesondere angepasst, ein Hochgeschwindigkeitsflammspritzverfahren durchzuführen. Dabei wird das Pulver 16 mittels einer Gasflamme erhitzt und mit hoher Geschwindigkeit auf die Fasermatte 13 und in die Vertiefung 7 gespritzt. Durch die Flamme kann das Pulver 16 teilweise verändert, bspw. aufgeschmolzen, werden. Dadurch, dass sowohl das Substrat 4, die Fasermatte 13 als auch das Pulver 16 artgleich sind, wird eine Haftung des Pulvers 16 an der Fasermatte 13 und an der Vertiefung des Substrates 4 bewirkt.

Figur 4 zeigt das Bauteil 1 mit der Vertiefung 7, der Fasermatte 13 und dem Pulver 16 nach einer anschließenden Wärmebehandlung. Durch eine Wärmebehandlung, also aufgrund einer Temperaturerhöhung (T⁺), schmilzt das Pulver und infiltriert die Fasermatte 13 und füllt so die Fasermatte 13 in der Vertiefung vollständig aus. Dadurch bildet sich einen Bereich, der sowohl eine hohe Festigkeit, als auch und eine gute Anbindung an das Bauteil 1 aufweist. Die Wärmebehandlung ist insbesondere eine Lösungsglühung, durch die eine Anbindung des Substrats 4, der Fasermatte 13 und des Pulvers 16 durch Diffusion herbeigeführt wird.

Die Figur 5 zeigt beispielhaft eine Gasturbine 100 in einem Längsteilschnitt. Die Gasturbine 100 weist im Inneren einen um eine Rotationsachse 102 drehgelagerten Rotor 103 mit einer Welle 101 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108. Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet. Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt). Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen. Die Dichte liegt vorzugsweise bei 95% der theoretischen Dichte. Auf der MCrAIX-Schicht (als Zwischenschicht oder als äußerste Schicht) bildet sich eine schützende Aluminiumoxidschicht (TGO = thermal grown oxide layer).

Auf der MCrAIX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrA1X-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 7 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAIX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAIX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Anschließend werden auch noch Risse in der Turbinenschaufel 120, 130 oder dem Hitzeschildelement 155 mittels des erfindungsgemäßen Verfahrens repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zum Aufbringen von Material auf ein Bauteil (1), das ein Substrat (4) aus einem ersten Material umfasst, wobei auf dem Substrat (4) ein Geflecht (13) angeordnet wird, das ein zweites Material umfasst, und das Substrat (4) und das darauf angeordnete Geflecht (13) mittels eines Spritzverfahrens mit einem Beschichtungsmaterial (16) beschichtet werden, das ein drittes Material umfasst, wobei das erste, zweite und dritte Material artgleiche Materialien sind.

2. Verfahren nach Anspruch 1, bei dem das Spritzverfahren ein thermisches Spritzverfahren umfasst.

3. Verfahren nach Anspruch 2, bei dem das thermische Spritzverfahren Hochgeschwindigkeitsflammspritzen umfasst.

4. Verfahren nach einem der vorstehenden Ansprüche, bei dem nach der Beschichtung des Substrats (4) und des Geflechts (13) mit dem Beschichtungsmaterial (16) eine Wärmebehandlung (T⁺) durchgeführt wird.

5. Verfahren nach Anspruch 4, bei dem die Wärmebehandlung (T⁺) ein Lösungsglühen umfasst.

6. Verfahren nach einem der vorstehenden Ansprüche, bei dem das Geflecht (13) in einer Vertiefung (7) des Substrats (4) angeordnet wird.

7. Verfahren nach einem der vorstehenden Ansprüche, bei dem das Geflecht (13) an dem Substrat (4) fixiert wird, bevor die Beschichtung erfolgt.

8. Verfahren nach einem der vorstehenden Ansprüche zur Reparatur eines Bauteils (1), insbesondere eines Turbinenbauteils (120, 130, 138, 155).

9. Verfahren nach einem der vorstehenden Ansprüche, bei dem das Bauteil (1) eine Gasturbinenkomponente, insbesondere eine Turbinenschaufel (120, 130) oder ein Ringsegment ist.

10. Verfahren nach einem der vorstehenden Ansprüche, bei dem das Bauteil (1) eine Basislegierung auf Fe-, Co- oder Ni-Basis umfasst.
